# EUROPEAN PATENT APPLICATION

(11) **EP 4 327 973 A1**
(43) Date of publication of application: **28.02.2024**
(21) Application number: 23192613.0
(22) Date of filing: 22.08.2023
(51) Int. Cl.: B23K 11/00, B21F 27/10, B23K 11/11, E04H 17/14, B23K 101/22

(54) **METHOD FOR WELDING BARS INTO AN IMPROVED FENCE PANEL**

(30) Priority: 22.08.2022 BE 202205653
(71) Applicant: Balak Coatings nv, 3900 Pelt (BE)
(72) Inventor: van Bakel, Frans, 3900 Pelt (BE); Riepen, Vicky, 3900 Pelt (BE); van Hoeij, Marcel, 3900 Pelt (BE)
(74) Representative: Brantsandpatents bv

(57) **Abstract**

A method of welding bars into an improved double-wire fence panel, comprising the steps of: (i) supplying and positioning 51 metal longitudinal bars to a welding apparatus, where the metal longitudinal bars are positioned parallel, and where the distance between two adjacent longitudinal bars is 40-60 mm c.t.c., (ii) supplying and positioning two metal transverse bars at the welding apparatus, where the transverse bars touch the longitudinal bars perpendicularly, so that each longitudinal bar has one point of contact with each transverse bar, and where a first transverse bar is supplied at the top of a plane formed by the parallel longitudinal bars and a second transverse bar is supplied at the bottom of the plane, so that an opposing pair of transverse bars is formed, (iii) the simultaneous welding of the points of contact of a transverse bar to the 51 longitudinal bars, (iv) repeating steps ii and iii, whereby a fence panel is obtained, wherein the resulting fence panel has a maximum horizontal deflection of between -10 and 10 mm.

## Description

### TECHNICAL FIELD

The invention relates to a method for welding bars into an improved fence panel.

### PRIOR ART

The welding of a fence panel consisting of transverse wires (or transverse bars) and longitudinal wires (or longitudinal bars) is known from BE1012179.

However, a problem with the known welding processes for fence panels is that fence panels are obtained with reduced "straightness" because the wires are bent during welding. In addition, current welding processes are time-consuming.

The present invention aims to find a solution to the above-mentioned problem.

WO2002070168A1 relates to a multi-spot welding machine for producing mesh mats from a number of parallel longitudinal wires and transverse wires that cross these longitudinal wires at a right angle.

### SUMMARY OF THE INVENTION

The invention relates to a method for welding bars into a fence panel according to claim 1. Preferred forms of the method are set out in claims 2-13.

In a second aspect, the invention concerns a fence panel according to claim 14. A preferred form is shown in claim 15.

Welding all longitudinal bars to a transverse bar simultaneously ensures that the bars are not warped during welding. This occurs with so-called "cascade" welding, well known to those skilled in the art. With "cascade" welding, the various longitudinal wires are welded one by one to a specific transverse wire. This ensures that the wires can move relative to each other during welding.

The current method according to the invention counteracts this problem by simultaneously welding all points of contact of a transverse bar with the longitudinal bars. This results in an improved fence panel with improved straightness. Since fence panels are intended to be placed in series using posts in the ground to form a fence, the straightness of each fence panel is crucial to obtain a straight multi-panel fence.

It is an objective of the invention to produce double-wire fence panels with 51 longitudinal bars efficiently (in the shortest possible time) with the least possible deflection. Both horizontal and vertical deflection are minimized.

### DETAILED DESCRIPTION

The invention relates to a method for welding bars into an improved fence panel.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "provided with," "contain," "containing," "include," "including" are synonyms and are inclusive or open-ended terms that indicate the presence of what follows, and which do not exclude or prevent the presence of other components, characteristics, elements, members, steps, as known from or disclosed in the prior art.

The terms "consist of," "consisting of," "being composed of," "composed of," are synonyms and are exclusive or closed-ended terms indicating the presence of what follows, and excluding or precluding the presence of other components, features, elements, members, steps known or described in the art.

Quoting numeric intervals by the endpoints includes all integers, fractions, and/or real numbers between the endpoints, including those endpoints.

The term "c.t.c." (center to center) refers to a distance between the center (the heart) of a circular cross-section of a bar and the center (the heart) of a circular cross-section of another bar.

The term "longitudinal bars" or "longitudinal wires" refers to the bars that are positioned vertically relative to a ground plane in a finished and installed fence panel.

The term "transverse bars" or "transverse wires" refers to the bars that are positioned horizontally relative to a ground plane in a finished and installed fence panel.

In a first aspect, the invention concerns a method for welding bars into an improved double-wire fence panel.

In an embodiment, the method comprises the steps of:
i. supplying and positioning 51 metal longitudinal bars to a welding apparatus, where the metal longitudinal bars are positioned parallel, and where the distance between two adjacent longitudinal bars is 40-60 mm c.t.c.,
ii. supplying and positioning two metal transverse bars at the welding apparatus, where the transverse bars touch the longitudinal bars perpendicularly, so that each longitudinal bar has one point of contact with each transverse bar, and where a first transverse bar is supplied at the top of a plane formed by the parallel longitudinal bars and a second transverse bar is supplied at the bottom of the plane, so that an opposing pair of transverse bars is formed,
iii. the simultaneous welding of all points of contact of a transverse bar to the 51 longitudinal bars,
iv. repeating steps ii and iii, whereby a fence panel is obtained.

It is clear that steps ii and iii are repeated depending on the length of the longitudinal bars and therefore the intended height of the fence panel.

In a preferred embodiment, the resulting double-wire fence panel has a maximum horizontal deflection of between -10 and 10 mm.

With twin-wire or double-wire fence panels, parallel vertical bars (wires) are welded to horizontal bars (wires), whereby the vertical bars are welded at the same height between two horizontal bars (a pair).

Welding all longitudinal bars to a transverse bar simultaneously ensures that the bars are not warped during welding. This occurs with so-called "cascade" welding, well known to those skilled in the art. With "cascade" welding, the various longitudinal wires are welded one by one to a specific transverse wire. This ensures that the wires can move relative to each other during welding.

The current method according to the invention counteracts this problem by simultaneously welding all points of contact of a transverse bar with the longitudinal bars. This results in an improved fence panel with improved straightness. Since fence panels are intended to be placed in series using posts in the ground to form a fence, the straightness of each fence panel is crucial to obtain a straight multi-panel fence. "Straightness" refers to the extent to which the fence panel deviates from the intended parallelism and perpendicularity of the bars relative to each other. This straightness is determined by the size of the arcs (deflection) measured in the vertical and horizontal directions.

In an embodiment, a plurality of longitudinal bars are supplied in a bundle in step (i) and then singulated. In a further preferred form, the longitudinal bars are singulated in slots positioned upstream of the welding apparatus, wherein the slots are parallel to each other and wherein the distance between two adjacent slots is between 40 and 60 mm, preferably between 45 and 55 mm, most preferably is approximately 50 mm. The longitudinal bars are then pushed parallel into the welding apparatus via the slots.

In an embodiment, the longitudinal bars and transverse bars have a different composition. In another embodiment, the longitudinal bars and transverse bars have the same composition.

The longitudinal and transverse bars are made of unalloyed steel, low-alloy steel or high-alloy steel. Steel wire can be made from high or low carbon steel.

Unalloyed steel contains a maximum of 1.5% of alloying elements (excluding carbon (C)). Unalloyed steel has a carbon percentage of 0.5% to 2%. Low-alloy steel contains between 1.5 and 5% alloying elements (excluding carbon). High-alloy steel contains more than 5% of alloying elements. The longitudinal and transverse bars are preferably made of unalloyed steel. The term "alloying elements" refers to the elements that are present in the alloy in addition to iron and carbon. In a preferred form, the longitudinal and transverse bars are made of an alloy comprising iron (Fe), carbon (C) and alloying elements. Preferably, the alloy comprises a maximum of 1.5% alloying elements, more preferably a maximum of 1.4%, even more preferably a maximum of 1.3%, even more preferably a maximum of 1.2%, most preferably a maximum of 1.1%. Preferably the alloy comprises at least 0.5% alloying elements, more preferably at least 0.6%, even more preferably at least 0.7%, even more preferably at least 0.8%, even more preferably at least 0.9%, most preferably at least 1%. In another preferred embodiment, the alloy comprises between 0.5 and 1.5% alloying elements, preferably between 0.6 and 1.5%, more preferably between 0.7 and 1.4%, even more preferably between 0.8 and 1.3%, even more preferably between 0.9 and 1.2%, most preferably between 1 and 1.1%.

In an embodiment, the alloy comprises a maximum of 0.1% C, more preferably a maximum of 0.09%, even more preferably a maximum of 0.085%, even more preferably a maximum of 0.08%, most preferably a maximum of 0.075%. Preferably, the alloy comprises at least 0.025% C, more preferably at least 0.03%, even more preferably at least 0.035%, even more preferably at least 0.04%, most preferably at least 0.045%. In another preferred embodiment, the alloy comprises between 0.02 and 0.1% C, preferably between 0.025 and 0.09%, more preferably between 0.035 and 0.085%, even more preferably between 0.04 and 0.08%, most preferably between 0.045 and 0.075%.

In a preferred embodiment, the alloy comprises alloying elements selected from the list of: manganese (Mn), silicon (Si), sulfur (S), phosphorus (P), nitrogen (N), copper (Cu), chromium (Cr), nickel (Ni), niobium (Nb), tin (Sn), aluminum (Al) or any combination thereof. Preferably the alloy comprises manganese (Mn), silicon (Si), sulfur (S), phosphorus (P), nitrogen (N), copper (Cu), and optionally chromium (Cr), nickel (Ni), niobium (Nb), tin (Sn), aluminum (Al).

Preferably, the alloy comprises Mn in an amount between 0.3 and 0.5%, more preferably between 0.35 and 0.45%, Si in an amount between 0.05 and 0.25%, more preferably between 0.1 and 0.2%, S in an amount between 0.01 and 0.045%, more preferably between 0.015 and 0.04%, P in an amount between 0.005 and 0.03%, more preferably between 0.005 and 0.025%, Cu in an amount between 0.2 and 0.4%, more preferably between 0.25 and 0.35%, N in an amount between 0.005 and 0.02%, more preferably between 0.005 and 0.015%, and Cr in an amount of up to 0.15%, more preferably up to 0.1%, Ni in an amount up to 0.15%, more preferably up to 0.1%, and Nb in an amount up to 0.005%, more preferably up to 0.002%, Sn in an amount up to 0.05%, more preferably up to 0.03%, and/or Al in an amount up to 0.005%, more preferably up to 0.003%.

Preferably, the transverse and longitudinal bars (bars) are made of steel wire. In an embodiment, the bars are obtained by drawing, straightening and cutting steel wire.

In a preferred form, the bars have a wire strength between 500 and 1000 N/mm², more preferably between 500 and 750 N/mm². The tensile strength is measured by means of a tensile strength test, which results in a stress-strain diagram. The tensile strength is then determined from this. According to standard E DIN EN 10223-4:2008-12, the tensile strength is between 350 N/mm² and 950 N/mm² with a maximum spread of 200N/mm² per batch of fence panels.

According to an embodiment, the longitudinal bars supplied in step (i) have a length selected from the list: 606, 608, 630, 806, 808, 830, 1006, 1008, 1030, 1206, 1208, 1230, 1406, 1408, 1430, 1606, 1608, 1630, 1806, 1808, 1830, 2006, 2008, 2030, 2206, 2208, 2230, 2406, 2408, 2430 mm. According to an embodiment, the transverse bars supplied in step (ii) have a length between 2000 and 3000 mm; preferably between 2400 and 2600, even more preferably between 2500 and 2550 mm, most preferably 2508 or 2510 mm.

In a preferred embodiment, the distance between two adjacent longitudinal bars is 40-60 mm c.t.c., more preferably between 45 and 55 mm, even more preferably between 49 and 51, most preferably about 50 mm.

In a preferred form, an electric current between 3000 and 7000 amperes (A), preferably between 4000 and 6000 A, more preferably about 5000 A, per point of contact is used to weld a transverse bar to a longitudinal bar.

In a preferred form, steps (ii) and (iii) are repeated between 1 and 50 times. Preferably the steps are repeated between 1 and 25 times. In a further embodiment, the distance between the adjacent transverse bars is 100-300 mm c.t.c., preferably 150-250 mm, more preferably 180-220 mm, most preferably about 200 mm. In a further or another embodiment, the longitudinal bars are transported through the welding apparatus, so that the transverse bars are supplied and positioned every 100-300 mm c.t.c., preferably 150-250 mm, more preferably 180-220 mm, most preferably about 200 mm.

The method described herein is particularly suitable for welding bars to a fence panel in a continuous manner. Herein, the bars are transported along a predetermined route in a continuous manner, preferably at a speed in the range of about 0.1 m/min to about 100 m/min, more preferably at a speed in the range of about 0.5 m/min to about 50 m/min, and most preferably at a speed in a range of about 1 m/min to about 10 m/min. For example, the transport speed of the steel wire can be about 1 m/min, about 1.5 m/min, about 2 m/min, about 2.5 m/min, about 3 m/min, about 3.5 m/min, about 4 m/min, about 4.5 m/min, about 5 m/min, about 5.5 m/min, about 6 m/min, about 7 m/min, about 8 m/min, about 9 m/min, or about 10 m/min. Since in the current method the longitudinal bars lie still during welding and periodically move through the welding apparatus, it will be apparent to one skilled in the art that these are average speeds, calculated on the basis of passed through and welded meters of bar per unit time.

In a preferred form, between 10 and 100, preferably between 20 and 80, more preferably between 30 and 70, even more preferably between 40 and 60, even more preferably 50 and 55 longitudinal bars, most preferably 51 longitudinal bars, are welded simultaneously to a transverse bar.

In a preferred form, in step ii. two transverse bars are supplied and positioned, whereby a first transverse bar is supplied at the top of a plane formed by the parallel longitudinal bars and a second transverse bar is supplied at the bottom of the plane, so that an opposing pair of transverse bars is formed.

In a further preferred form, the opposing pair of transverse bars is simultaneously welded to the longitudinal bars (called a double weld). In another further preferred form, the first and second transverse bars are successively welded to the longitudinal bars (called a correction weld).

In a further preferred form, both correction welds and double welds are carried out on the same fence panel. For example, an opposing pair of transverse bars can be welded in step iii using a double weld, whereby the next opposing pair is welded using a correction weld during a repetition of step ii and step iii.

In a specific preferred form, step iii. involves performing a double weld or a correction weld. In this preferred form, both correction welds and double welds are preferably carried out on the same fence panel.

In a specific preferred form, a maximum of 5 correction welds are carried out on the same fence panel, preferably a maximum of 4 correction welds and even more preferably a maximum of 3 correction welds.

In a further or other specific preferred form, at least 1 correction weld is carried out on the same fence panel. In a further or other specific preferred form, between 1 and 5 correction welds are carried out on the same fence panel, preferably between 1 and 4 correction welds, most preferably between 1 and 3 correction welds. The number of correction welds will depend on the height of the fence, where the higher the fence, the more correction welds.

The correction welds are preferably evenly distributed over the fence panel. For example, if one correction weld needs to be carried out, the correction weld will be carried out on the middle opposing pair of transverse bars, i.e. the opposing pair of transverse bars that are 1/2 of the height of the fence panel. For example, if two correction welds need to be carried out, the correction welds will be carried out on the opposing pairs of transverse bars that are positioned at 1/3 and 2/3 of the height of the fence panel. For example, if three correction welds need to be carried out, the correction welds will be carried out on the opposing pairs of transverse bars positioned at 1/4, 2/4 and 3/4 of the height of the fence panel. A double weld is performed on the remaining opposing pairs of transverse bars.

The inventors have found that introducing one or more correction welds in addition to the double welds further improves the straightness of the fence panel. By carrying out the correction welds, any curvature created during welding can be corrected.

Preferably the weld time of a double weld is between 0.01 and 1.00 seconds, more preferably between 0.05 and 0.50 seconds, even more preferably between 0.10 and 0.20 seconds.

Preferably the weld time of a correction weld is between 0.01 and 1.00 seconds, more preferably between 0.10 and 0.50 seconds, even more preferably between 0.20 and 0.30 seconds.

The speed at which the transverse bars are welded to the longitudinal bars minimizes vertical and horizontal deflection.

Preferably, the pre-pressure time during the welding process is between 0.01 and 1.00 seconds, more preferably between 0.10 and 0.50 seconds, even more preferably between 0.20 and 0.30 seconds.

Preferably the upslope during the welding process is between 0.01 and 1.00 seconds, more preferably between 0.10 and 0.50 seconds, even more preferably between 0.20 and 0.30 seconds.

Preferably, the post-pressure time during the welding process is between 0.01 and 1.00 seconds, more preferably between 0.025 and 0.25 seconds, even more preferably between 0.05 and 0.15 seconds.

The inventors found that these parameter ranges are beneficial for the weld strength and the size of the weld collar.

The terms "weld time," "pre-pressure time," "upslope" and "post-pressure time" should be interpreted as understood by a person skilled in the art of welding and is measured according to standard procedures in the technical field.

After stopping the welding current (end of weld time), the weld solidifies. The amount of molten, then solidified material ultimately has the shape of a nugget. The weld is therefore referred to as "weld nugget." To obtain a high-quality weld nugget, it is important that the plate parts fit properly when the welding current is switched on. This is achieved by applying the pressing force some time in advance. This time is referred to as "pre-pressure time." Likewise, it is important that the pressing force is maintained for a certain time after switching off the current to allow the weld nugget to solidify. This time is called "post-pressure time." Part of the weld time is used to gradually increase the current from 0 to the desired maximum value. This time portion is referred to as "upslope."

In a preferred form, the welding points, i.e. the points of contact where the transverse bars are welded to the longitudinal bars, are visually checked by an operator. In another or further embodiment, the welding points are checked periodically, i.e. approximately once a day, preferably about 5 times a day, by means of a tensile testing machine.

In an embodiment, the resulting improved fence panel is pre-treated and galvanized.

In a preferred form, the transverse bars have a first temperature in degrees Celsius, and the longitudinal bars have a second temperature in degrees Celsius, wherein the ratio of the first temperature to the second temperature is between 0.8 and 1.2, preferably between 0.9 and 1.1, more preferably is about 1.

A difference in temperature between the longitudinal bars and transverse bars can cause a difference in tension, which can cause the fence panel to warp during welding.

In a preferred form, the transverse bars have a first temperature between 17 and 25°C, more preferably room temperature.

In a preferred form, the longitudinal bars have a second temperature between 17 and 25°C, more preferably room temperature.

An increased temperature creates tension in the bars, which means that an increased temperature of the transverse and/or longitudinal bars will lead to a crooked fence panel.

In an embodiment, the pressure during welding is between 1 and 7 bar, preferably between 3 and 6 bar, preferably between 4 and 5 bar.

In a second aspect, the invention concerns an improved double-wire fence panel comprising 51 longitudinal bars. In a preferred embodiment, the fence panel has a horizontal deflection of a maximum of 0 +/- 10 mm, more preferably a maximum of 0 +/- 8 mm, more preferably a maximum of 0 +/- 6 mm, even more preferably a maximum of 0 +/- 4mm.

In a preferred form, the fence panel has a vertical deflection of a maximum of 0 +/- 15 mm, preferably a maximum of 0 +/- 14 mm, more preferably a maximum of 0 +/- 13 mm, even more preferably a maximum of 0 +/- 12 mm, even more preferably a maximum of 0 +/- 11 mm, even more preferably a maximum of 0 +/- 10 mm, even more preferably a maximum of +/- 9 mm, most preferably a maximum of 0 +/- 8 mm.

In another or further embodiment, the vertical deflection depends on the height of the fence panel (and therefore on the length of the longitudinal bars), so that for fence panels with a height of up to 1030 mm, the vertical deflection is a maximum of 0 +/-10 mm, preferably a maximum of 0 +/- 9 mm, more preferably a maximum of 0 +/- 8 mm, even more preferably a maximum of 0 +/- 7 mm, even more preferably a maximum of 0 +/- 6 mm, even more preferably maximum 0 +/- 5 mm, even more preferably a maximum of 0 +/- 4 mm, most preferably a maximum of 0 +/- 3 mm, and so that for fence panels with a height between 1230 and 1830 mm, the vertical deflection is a maximum of 0 + /- 12 mm, preferably a maximum of 0 +/- 11 mm, more preferably a maximum of 0 +/- 10 mm, even more preferably a maximum of 0 +/- 9 mm, even more preferably a maximum of 0 +/- 8 mm, even more preferably a maximum of 0 +/- 7 mm, even more preferably a maximum of 0 +/- 6 mm, most preferably a maximum of 0 +/- 5 mm.

The fence panel preferably has a height selected from the list: 630, 830, 1030, 1230, 1430, 1630, 1830, 2030, 2230, 2430 mm. The fence panel preferably has a length between 2000 and 3000 mm; preferably between 2400 and 2600, even more preferably between 2500 and 2550 mm, most preferably 2508 or 2510 mm, such as for example 2510 mm +2/-0 mm.

In a preferred form, the distance between two adjacent longitudinal bars in the fence panel is 40-60 mm c.t.c., more preferably between 45 and 55 mm, even more preferably between 49 and 51, most preferably about 50 mm.

In a further embodiment, the distance between the adjacent transverse bars in the fence panel is 100-300 mm c.t.c., preferably 150-250 mm, more preferably 180-220 mm, most preferably about 200 mm.

In a preferred form, the fence panel is obtained by means of a method according to the first aspect of the present invention.

In the following, the invention is described by means of non-limiting figures and examples which illustrate the invention and which are not intended to and should not be interpreted as limiting the scope of the invention.

### EXAMPLES AND DESCRIPTION OF THE FIGURES

**Figure 1** shows a schematic representation of a particular embodiment of the method described herein for welding bars into a fence panel.
**Figure 2** shows a perspective view of an improved fence panel obtained by means of a method according to the first aspect.
**Figure 3** shows an enlarged perspective view of an improved fence panel obtained by a method according to the first aspect (section A in **Figure 2**).
**Figure 4** shows the measured deflections in a fence panel according to the second aspect.

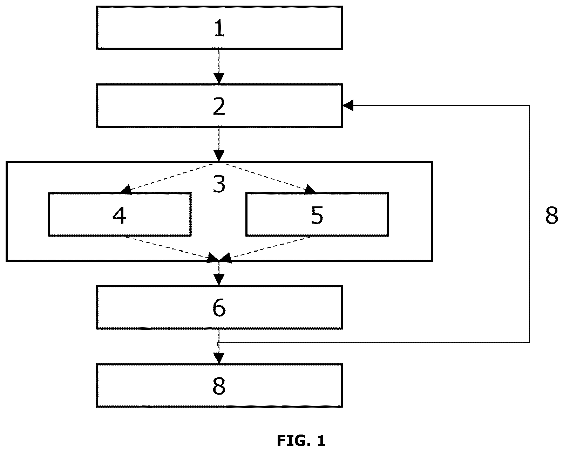

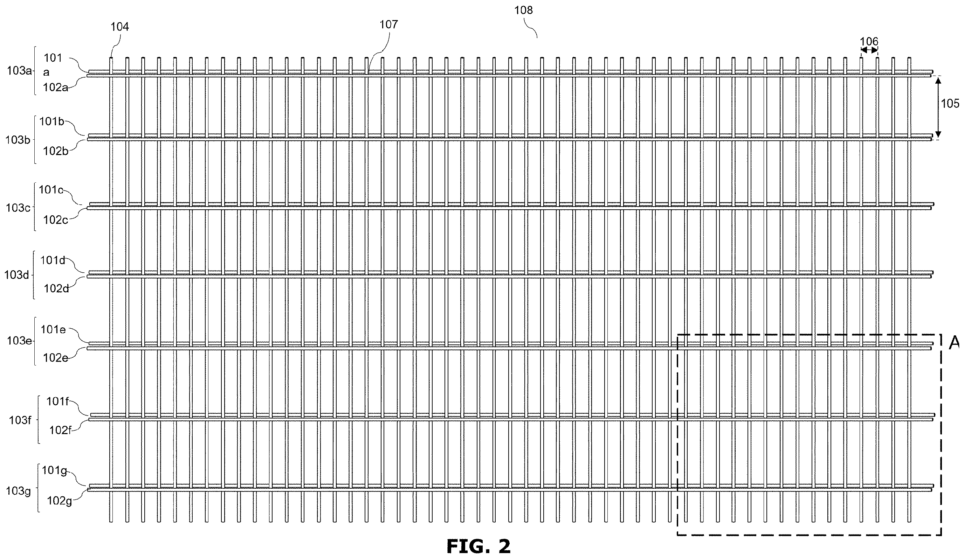

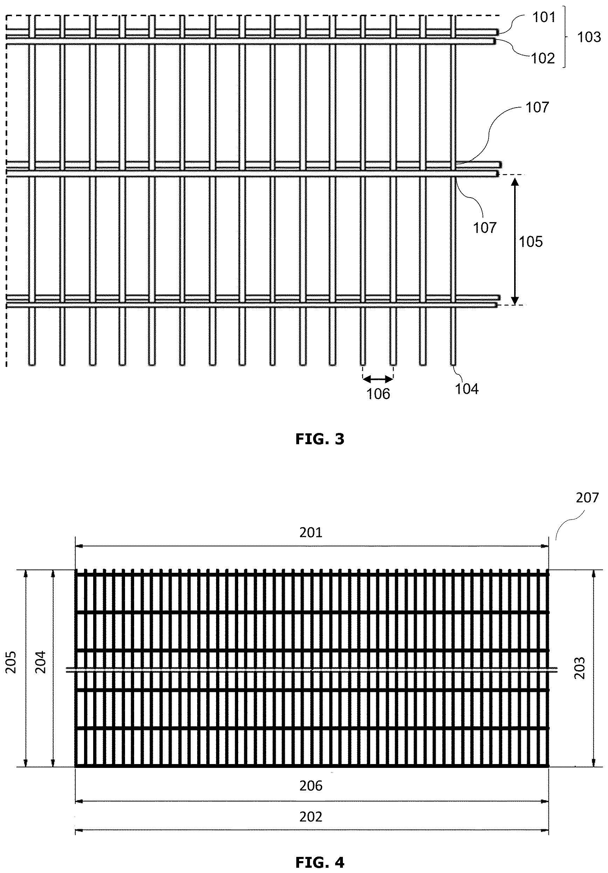

**Example 1,** as shown in **Figure 1****,** is a method for welding bars into a twin-wire fence panel (108), as shown in **Figure 2** and **Figure 3****.** The method comprises in a first step supplying (1) 51 longitudinal bars (104) to a welding apparatus. The longitudinal bars can have a length of 630, 830, 1030, 1230, 1430, 1630, 1830, 2030, 2230 or 2430 mm and are supplied (1) in a parallel position, with the distance (106) between two adjacent longitudinal bars (104) being 50 mm center-to-center. In a second step of the method described herein, a first (101a) and a second (102a) transverse bar are fed perpendicularly (2) to the longitudinal bars (104) along either side of the longitudinal bars (104) so that an opposing pair of transverse bars (103a) are formed. Each transverse bar (101a, 102a) has 51 perpendicular points of contact (107) with the longitudinal bars (104), whereby each transverse bar (101a, 102a) touches each longitudinal bar (104) once.

Then, the method comprises a third step of welding (3) the first (101a) and/or the second (102a) transverse bar to the longitudinal bars (104) at the points of contact (107), wherein all points of contact (107) belonging to the same transverse bar (101a, 102a) are welded simultaneously. The two supplied transverse bars (first (101a) and second (102a) transverse bars) are welded to the longitudinal bars either simultaneously (4) or successively (5). An electric current of 5000 amperes is provided per welding point (point of contact (107)).

After the opposing pair of transverse bars (103a) has been welded to the longitudinal bars (104), the longitudinal bars are shifted 200 mm (105) through the welding apparatus (6), after which the second and third steps (2, 3) are repeated (7), until the desired number of levels of transverse bars (103a-g) is reached and an improved fence panel (108) is delivered (8). The distance (105) between two adjacent transverse bars (101 a-b, b-c, c-d, d-e, e-f, f-g; 102 a-b, b-c, c-d, d-e, e-f, f-g) is 200 mm c.t.c.

**Example 2** concerns the measurement results of the vertical (203, 204) and horizontal (201, 202) deflection in the fence panel (207), as shown in **Figure 4****.** The horizontal deflection is measured at the bottom (202) and at the top (201) of the fence panel and is a maximum of +/- 4 mm. The vertical deflection is measured on the sides (203, 204) of the fence panel and added together (203+204) for fence panels with a height of 808-1008 mm, height 1208-1830 mm, and height 2030-2430 mm, is respectively a maximum of +/- 3 mm, +/- 5 mm, and +/- 8 mm. The horizontal deflection (201, 202) and vertical deflection (203+204) are shown in **Table 1.**

**TABLE 1**

| Fence panel height (205) | Fence panel width (206) | Horizontal deflection (201, 202) | Vertical deflection (203+204) |
|---|---|---|---|
| 808-1008 mm +/- 1 mm | 2510 mm -2/+0 mm | 0 +/- 4 mm | 0 +/- 3 mm |
| 1208-1830 mm +/- 1 mm | 2510 mm -2/+0 mm | 0 +/- 4 mm | 0 +/- 5 mm |
| 2030-2430 mm +/- 1 mm | 2510 mm -2/+0 mm | 0 +/- 4 mm | 0 +/- 8 mm |

The deflection is the deviation in the center of the bar measured between the center line of a curved bar relative to the center line of the straight bar. The center line is the line through the center of the bar over the length of the bar.

The horizontal deflection is measured at the bottom transverse bar (202) and at the top transverse bar (201) of the fence panel and is a maximum of +/- 4 mm. The vertical deflection is measured on the outermost longitudinal bars (203, 204) of the fence panel and added together (203+204) for fence panels with a height of 808-1008 mm, height 1208-1830 mm, and height 2030-2430 mm, is respectively a maximum of +/- 3 mm, +/- 5 mm, and +/- 8 mm.

## Claims

1. A method of welding bars into an improved double-wire fence panel, comprising the steps of:
i. supplying and positioning 51 metal longitudinal bars to a welding apparatus, wherein the metal longitudinal bars are positioned parallel, and wherein the distance between two adjacent longitudinal bars is 40-60 mm c.t.c.,
ii. supplying and positioning two metal transverse bars at the welding apparatus, wherein the transverse bars touch the longitudinal bars perpendicularly, so that each longitudinal bar has one point of contact with each transverse bar, and wherein a first transverse bar is supplied at the top of a plane formed by the parallel longitudinal bars and a second transverse bar is supplied at the bottom of the plane, so that an opposing pair of transverse bars is formed,
iii. the simultaneous welding of the points of contact of a transverse bar to the 51 longitudinal bars,
iv. repeating steps ii and iii, whereby a fence panel is obtained, wherein both correction welds and double welds are carried out on the same fence panel, wherein in a double weld the opposing pair of transverse bars are simultaneously welded to the longitudinal bars and wherein in a correction weld the first and second transverse bars are successively welded to the longitudinal bars.

2. Method according to claim 1, wherein the obtained fence panel has a maximum vertical deflection of between -15 and 15 mm, preferably between -8 and 8 mm.

3. Method according to any one of the preceding claims, wherein the obtained fence panel has a maximum horizontal deflection of between -10 and 10 mm.

4. Method according to any one of the preceding claims, wherein the transverse bars have a first temperature in degrees Celsius, and the longitudinal bars have a second temperature in degrees Celsius, wherein the ratio of the first temperature to the second temperature is between 0.8 and 1.2, preferably between 0.9 and 1.1, preferably about 1.

5. Method according to any one of the preceding claims, wherein the transverse bars have a first temperature between 17 and 25°C.

6. Method according to any one of the preceding claims, wherein the longitudinal bars have a second temperature between 17 and 25°C.

7. Method according to any one of the preceding claims, wherein an electric current of 5000 A per point of contact is used to weld a transverse bar to a longitudinal bar.

8. Method according to any one of the previous claims, wherein step ii. and iii. are repeated between 1 and 50, preferably between 1 and 25 times, and wherein the distance between two adjacent transverse bars is 180-220 mm c.t.c.

9. Method according to any one of the preceding claims, wherein the longitudinal bars are transported through the welding apparatus, and wherein the transverse bars are supplied and positioned every 180-220 mm.

10. Method according to any one of the preceding claims, wherein the opposing pair of transverse bars is simultaneously welded to the longitudinal bars.

11. Method according to any one of the preceding claims, wherein the first and second transverse bars are successively welded to the longitudinal bars.

12. Method according to any one of the preceding claims, wherein the longitudinal bars are supplied at a speed between 1 and 10 m/min.

13. Method according to any one of the preceding claims, wherein the welded points of contact are visually checked by an operator.

14. An improved double-wire fence panel comprising 51 longitudinal bars, **characterized in that** the fence panel has a maximum horizontal deflection between -10 and 10 mm.

15. Fence panel according to claim 14, wherein the fence panel has a maximum vertical deflection of between -15 and 15 mm, preferably between -8 and 8 mm.
